# EUROPEAN PATENT APPLICATION

(11) **EP 2 017 033 A2**
(43) Date of publication of application: **21.01.2009**
(21) Application number: 08425463.0
(22) Date of filing: 02.07.2008
(51) Int. Cl.: B23K 37/00, F16L 55/18

(54) **Safe welding system for interventions of installation, repair, maintenance on low pressure gas methane supply piping**

(30) Priority: 20.07.2007 IT AR20070039
(71) Applicant: Odori, Mauro, 52020 Castelfranco di Sopra (AR) (IT); Odori, Enrico, 52020 Castelfranco di Sopra (AR) (IT)
(72) Inventor: Odori, Mauro, 52020 Castelfranco di Sopra (AR) (IT); Odori, Enrico, 52020 Castelfranco di Sopra (AR) (IT)

(57) **Abstract**

SAFE WELDING SYSTEM is a device destined to increase safety working conditions for intervention of installation, repair, maintenance on low pressure gas methane supply pipes. The problem to be solved is the management of the danger caused by the eventual burst of the pneumatic plugs (a couple for both sides of the intervention area) used for plugging low pressure methane flow inside low pressure (0,02 BAR) ducts: this event can make arrive the methane flow in the intervention area with possible creation of explosive air methane mixtures during welding operation.

SAFE WELDING SYSTEM is able to detect, by means of electronic pressure sensors mounted on the inflation device of the pneumatic plugs (which have an internal by-pass to let nitrogen injection inside the pipe), inflating pressure values of the plugs: if one of the plugs is damaged (because of roughness of pipe internal walls or a bad plug insertion, or crushing due to over pressure conditions outside the plug) the related pressure sensor sends an electric signal to the Electronic Rack which will automatically activate an acoustic alert, brake the electrical supply of the welding machine and, if a frontside plugs has burst (the nearest of the couple to the intervention area), let 8-10 BAR nitrogen flows (through the by-pass of the plugs) able to avoid potentially explosive air-methane mixtures (see DWG 1).

In common operating, by now, on this kind of interventions no automatic control on the damage state of the plugs is performed, neither seems to have been implemented any automatic kind of intervention able to avoid the potentially devastating effects of the burst of a couple of plugs (methane flow on the intervention area): the management of the danger is totally demanded to skill and experience of operators.

## Description

SAFE WELDING SYSTEM is a device purposeful to execution of installation, repair and maintenance interventions on low pressure (0,02 BAR) gas methane supply piping in safety conditions against danger of fire and explosion. In low pressure conditions methane flow is plugged, on both sides of the intervention area, by means of a couple of pneumatic by-pass plugs (available on the market in several dimension to fit all the pipe sizes used in low pressure methane supply) inflated with pressures rating between 1 ad 2,5 BAR so that to perfectly occupy the internal section area of the pipe and stop the gas flow by means of friction against pipe internal walls. Dangers related to this type of operation rise from the eventuality that one or more plug may burst during welding operations: plugs burst, or damage, can be produced by pipe wall roughness, or by wrong inflating pressures, or by unskilful plug insertion in the pipe. If both plugs on the same side of intervention area should burst, methane, though in low pressure conditions, would downright reach the intervention area creating highly dangerous explosive mixtures with air in condition of possible priming due to pipe welding operations.

The device is composed by the following parts:
1. By-Pass pneumatic Plug and Plug inflating Pressure Sensor (up to 8 pieces for device - DWG.2): the by-pass plug has an inner pipe (jointed to a flexible pipe exiting from the back side of the plug insertion and coaxial with the plug inflating pipe) that makes possible nitrogen injection beyond the plug. On plug inflating piping is assembled (inside an air proofing box) an electronic pressure sensor which detects the value of inflating pressure. The sensor is equipped with two regulable intervention threshold value, one high and one low (referring to the operating inflation pressure value of the plug): in the event of plug deflating or burst, the decrement of inflating pressure activates the low pressure alarm of the sensor which sends an electrical alarm signal; in the event of abnormal over pressure values outside the plug the crushing of the plug provokes a raise of the inflating pressure activating the high pressure alarm of the sensor which sends an electrical alarm signal. Several releases will be implemented with a wide range of by-pass plugs dimensions to fix the use of the device on pipes with diameters ranging between DN 2" and DN 12".
2. Electronic Rack (n°1 piece per device - DWG. 3): it gives 24Vcc electrical supply to the pressure sensors, from which receives the alarm signals. In the event of alarm signal, the Electronic Rack produces acoustic alerts, activates electric valves (n°8 pieces per device, N.C., 24Vcc supply, 1/2" joints) which let the injection of 10 BAR nitrogen throughout the plug by-pass, brakes the electrical supply of the welding machine by means of a specific contactor.
3. Nitrogen Header (n°1 piece per device - DWG. 4): is a tank filled with nitrogen at 10 bar directly fed by a 200 bar nitrogen bottle. By means of a pressure sensor and a safety valve, the pressure inside the header can range only 8 BAR - 15 BAR to grant enough nitrogen inside the pipe. When pressure becomes lower than 8 BAR (visible also on a manometer) the Electronic Rack sends an acoustic alert for changing nitrogen bottle. On the Header are mounted the electric valves that let nitrogen injection in the intervention area.

SAFE WELDING SYSTEM can be applied to any system for explosive fluids interception. In DWG. 5 it's possible to see the application of SAFA WELDING SYSTEM L.P. on mechanical devices for plug insertion available on the market.

### OPERATION FOR LOW PRESSURE INTERVENTIONS

Through specific hoses welded on the pipe, by-pass plugs (two for each side of the intervention area, are inserted in the pipe: for each couple, the plug with by-pass directed towards methane will be named "backside plug", the plug with by-pass directed towards the intervention area will be named "frontside plug". Plugs are inflated with nitrogen, methane is removed from the intervention area (included by the two couples of plugs), the Electronic Rack and the pressure sensor are activated, the piece of pipe to be removed is cut. If no pressure sensor is in alarm condition, welding operations can start. The following alarm events can occur:
1. Burst (or crushing) of a backside plug: received the alarm signal by the related pressure sensor, the Electronic Rack activates the acoustic alert and brakes the electrical supply of the welding machine by means of the contactor. The damaged plug is replaced: the welding machine supply will be automatically rehabilitated after 1 minute from the cease of the alarm condition (inflation of the new plug and pressure sensors measuring operating pressure values).
2. Burst (or crushing) of a frontside plug: received the alarm signal by the related pressure sensor, the Electronic Rack activates the acoustic alert, brakes the electrical supply of the welding machine, and activates the electric valves injecting nitrogen (stored in the header at 10-12 BAR) through the by-pass of the damaged frontside plug and the by-pass of the coupled backside plug: the intervention area and the upstream methane area will be flooded by 8-10 BAR nitrogen flows able to avoid the creation of potentially explosive air-methane mixtures; moreover, breaking the electrical supply of the welding machine will be avoided the main source of fire priming. The nitrogen flow can be interrupted by operators or will automatically stop at the cease of the alarm condition. The damaged plug is replaced: the welding machine supply will be automatically rehabilitated after 1 minute from the cease of the alarm condition (inflation of the new plug and pressure sensors measuring operating pressure values). When the intervention is finished and the welding joints are checked, the Electronic Rack is turned off and plugs are deflated and removed.

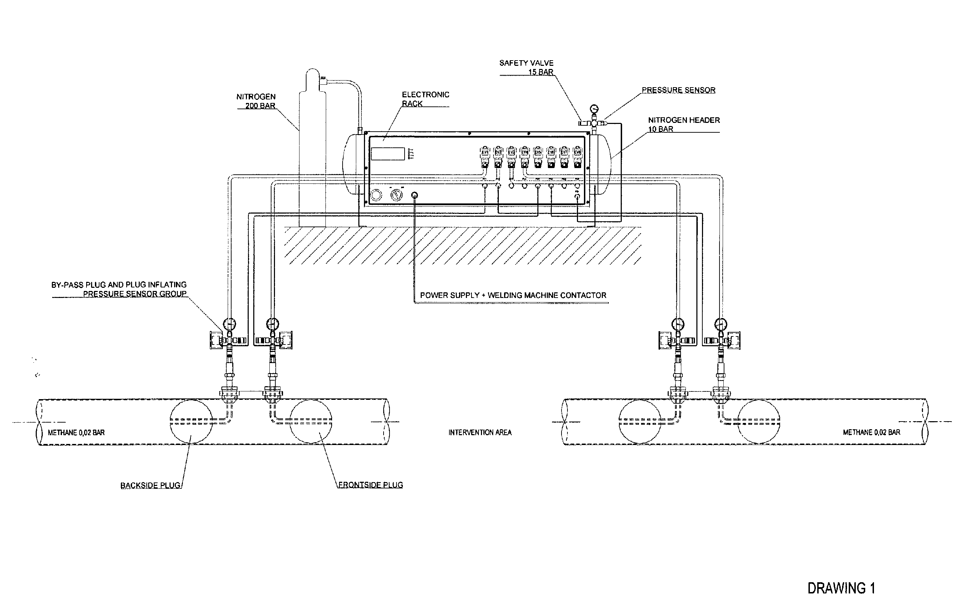

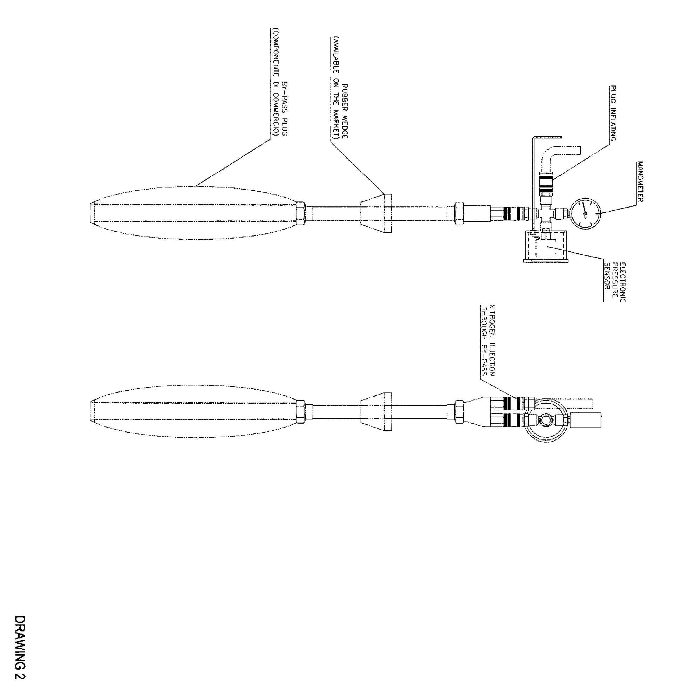

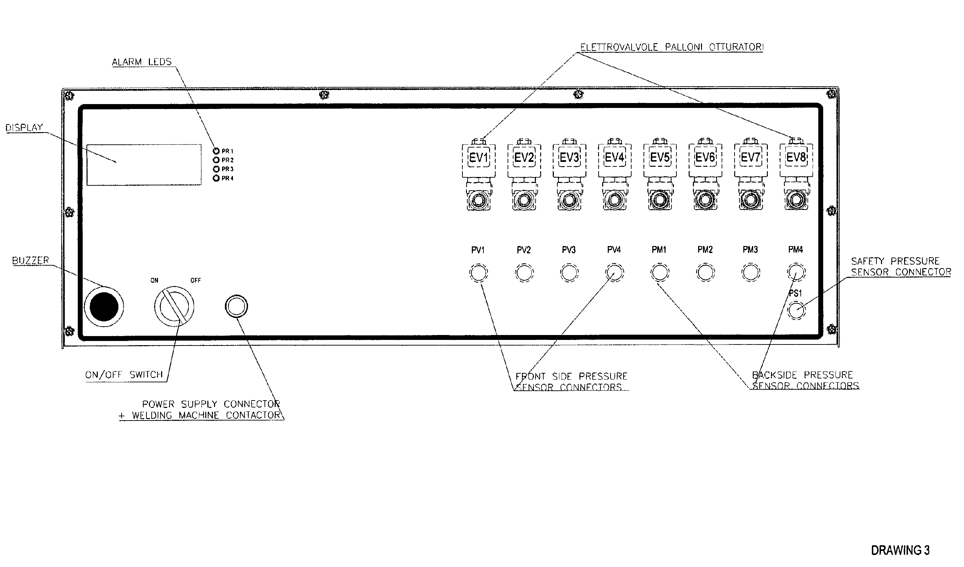

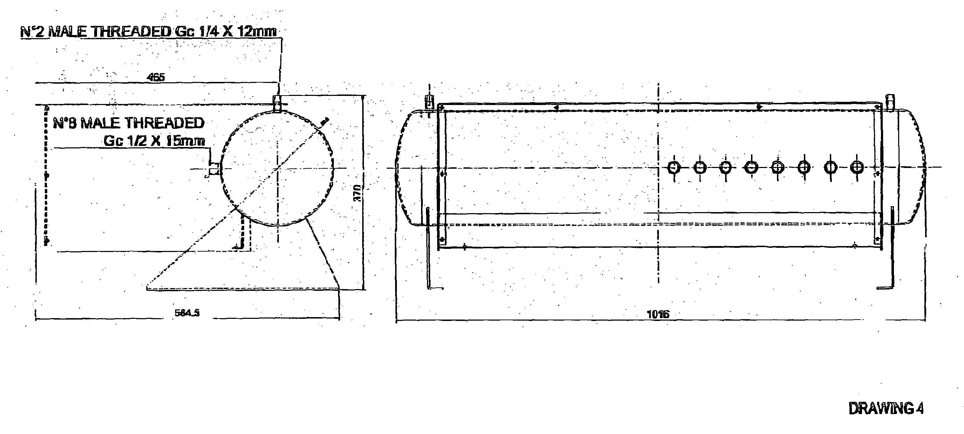

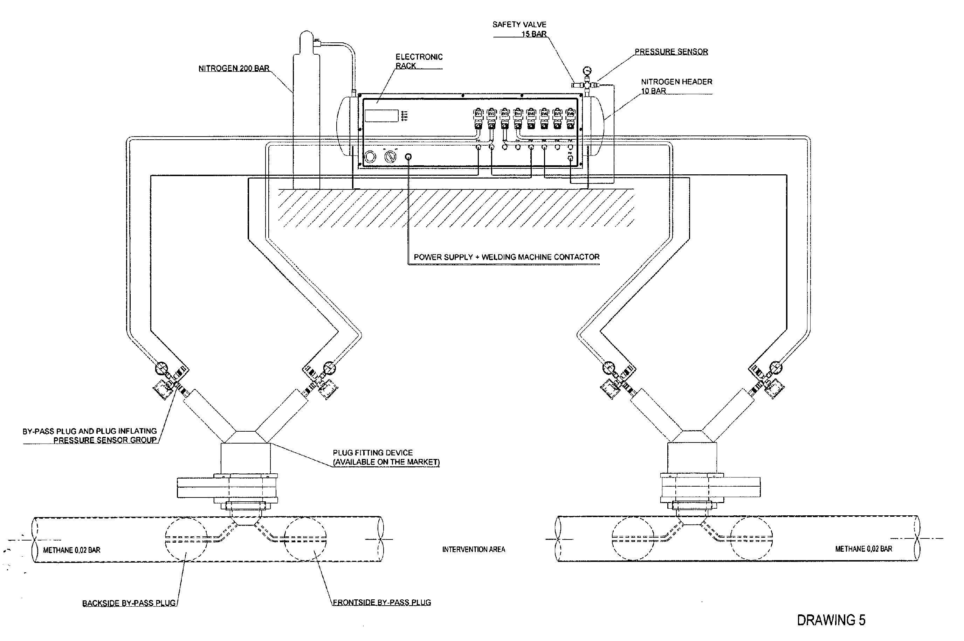

## Claims

1. SAFE WELDING SYSTEM is able to automatically detect the damage of any of the plugs and, automatically, operates effective actions able to: alert the operators about the establishing of danger by means of acoustic alert; avoid the main potential source of fire priming given by the welding machine; spread ( in the event of alarm of frontside pressure sensors) high pressure nitrogen flows able to avoid explosive air-methane mixtures. At the moment, in this kind of interventions, we don't know any automatic control on plugs damage: that is, the only way the operators can perceive that a plug is burst is hearing the burst noise, that can probably be covered from other noises present in the intervention area.

2. It seems also that, by now, no kind of automatic intervention to avoid the potentially devastating effects of plugs burst has been developed. The management of danger is therefore depending only on operators skill and experience.
